# EUROPEAN PATENT SPECIFICATION

(11) **EP 1 387 455 B1**
(45) Date of publication and mention of the grant of the patent: **04.07.2007**
(21) Application number: 03380173.9
(22) Date of filing: 14.07.2003
(51) Int. Cl.: H02G 3/04

(54) **Grid tray for electrical conductors and method for forming grid trays**
Gitterboden für elektrische Leiter und Verfahren zum Herstellen von Gitterböden
Plateau en grille pour conducteurs électriques et méthode pour former des plateaux en grille

(30) Priority: 31.07.2002 ES 200201809
(43) Date of publication of application: 04.02.2004
(73) Proprietor: Basor Electric S.A., 46700 Gandia (ES)
(72) Inventor: Banuls Femenia, Vicente, 46700 Gandia (ES)
(74) Representative: Sanz-Bermell Martinez, Alejandro

(56) References cited:
- EP-A1- 1 206 020

## Description

The technical field involved in this invention is that of electrical conductor-holder trays.

### Statement of the prior state of the art.

Conductor-holder trays, made of welded wire or rod forming squares, are well-known. They involve the advantage that the operator can easily and effectively adapt them to match the wall on which they back, by means of simple cutting and connecting operations, not requiring the connections, curved sections, couplings or other accessories which are necessary when the trays are made of sheet metal.

ES 1022876 U, for a tray for supporting aerial electrical cables, consists of a general grid arrangement, not claimed, and claims a rounded termination of the ends of the transversal rods.

ES 1028055 U consists of a tray with a general arrangement similar to the previous one, which consists of an inward bend of the transversal rods, these transversal rods being coupled to the corresponding longitudinal rod by means of a front or side coupling.

ES 1021363 consists of a band which, like a clamp, holds a central wall for this type of grid trays.

EP 1206020 consists of a cable track formed by a number of round section longitudinal metal rails welded to transverse elements which form a U-shape. Just the longitudinal rails placed at the upper edges of the U-shaped track is folded at regular intervals along its length in order to define a wave-like path, being straight all the other rails.

The object of this invention is a grid tray for electrical conductors and method for forming grid trays, with a structure that is basically similar to the ones previously known of, that is arranged on a basis of rods welded together, forming a support assembly for electrical cables. In this one, modifications have been made to the rods before and after each weld to each longitudinal rod, so that each of these takes a change of direction in order to reach the plane determined by the transversal rods. This means that the rod assembly is set on the same plane, facilitating the flatness of the assembly. In this same arrangement, the rods take on a form which gives greater bending strength with the same rod diameter.

Therefore, in order to make the following explanation clearer, four sheets of drawings are enclosed representing the essence of this invention in four figures.
Figure 1 shows a perspective view of the initial phase of the assembly process.

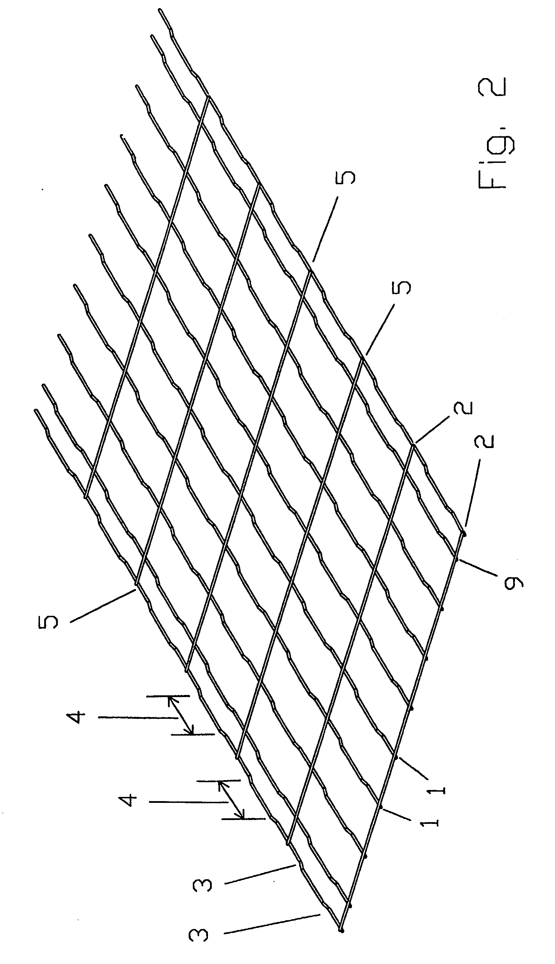

Figure 2 shows a perspective view of the grid set flat and with the rod bends already made.

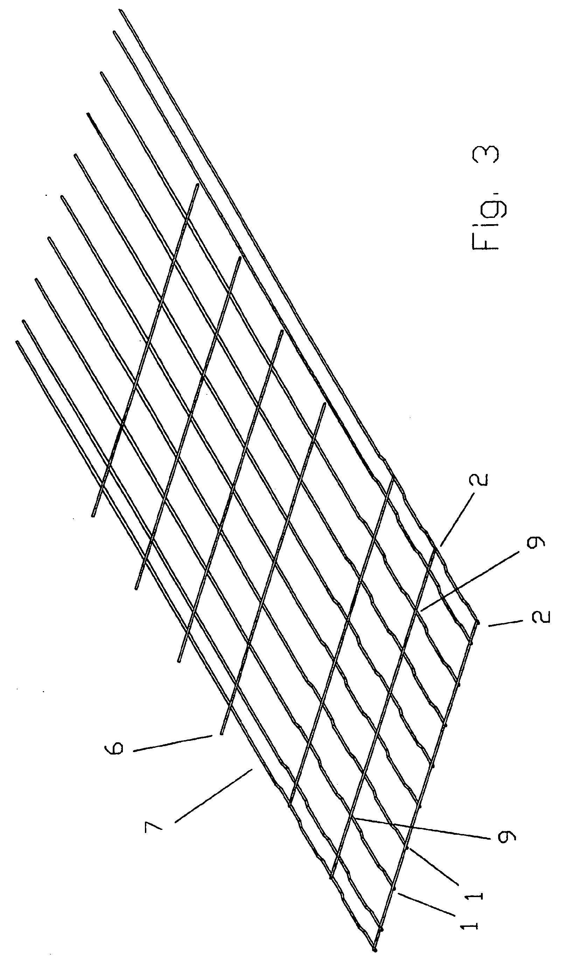

Figure 3 shows a perspective view of the grid set flat and with just a part of the rod bends already made.
Figure 4 shows a perspective view of the grid body with the sides bent into a right angle.

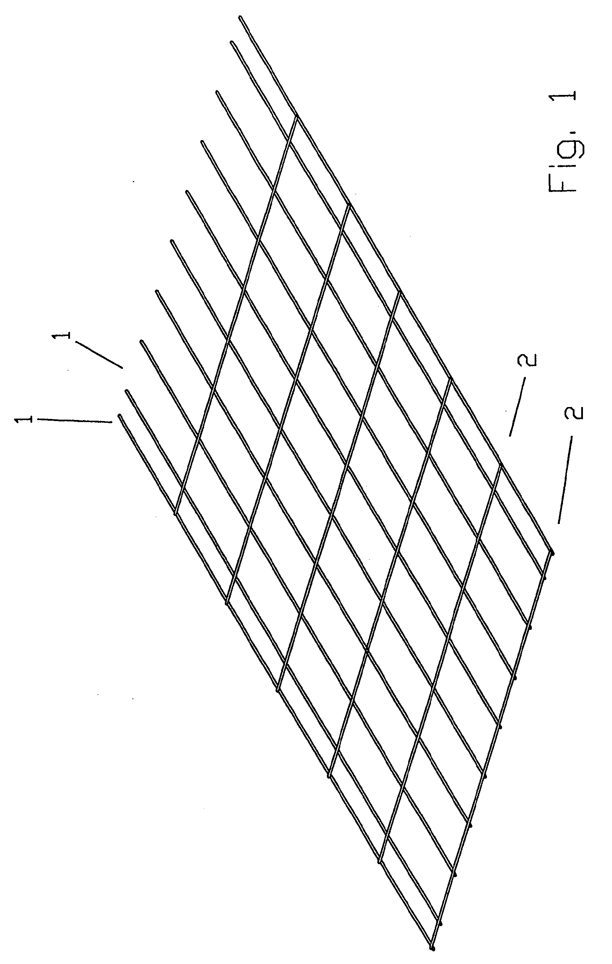

In these Figures 1 represents the longitudinal rods, 2 the transversal rods, 3 the bend in the longitudinal rods, 4 the distance between the bends of the longitudinal rods, 5 the ends of the rounded transversal rods, 6 the transversal rods still not welded to the longitudinal ones, 7 the partially bent longitudinal rods, 8 the bend in the transversal rods, 9 the welding or electro-welding between rods 1 and 2.

The tray is arranged in two alternative systems:

A first system consists in forming the transversal rods 2 with the longitudinal ones 1 by electro-welding. After all the rods have been welded 9, the grid is put through a bending machine which makes the bend 3 in the longitudinal rods, simultaneously or sequentially, so that the rods in each of the sections after and before the welds of the transversal rods are brought to the level of the transversal rods.

A second form of embodiment consists in the grid tray being formed by means of electro-welding 9 between the longitudinal and the transversal rods. After the welding 9 has been done the bend 3 in the portion of longitudinal rod 1 is made. The tray thus takes on the flat configuration of a good deal of its surface. After all of it has been welded, it is left with the mixed shape of its longitudinal sections.

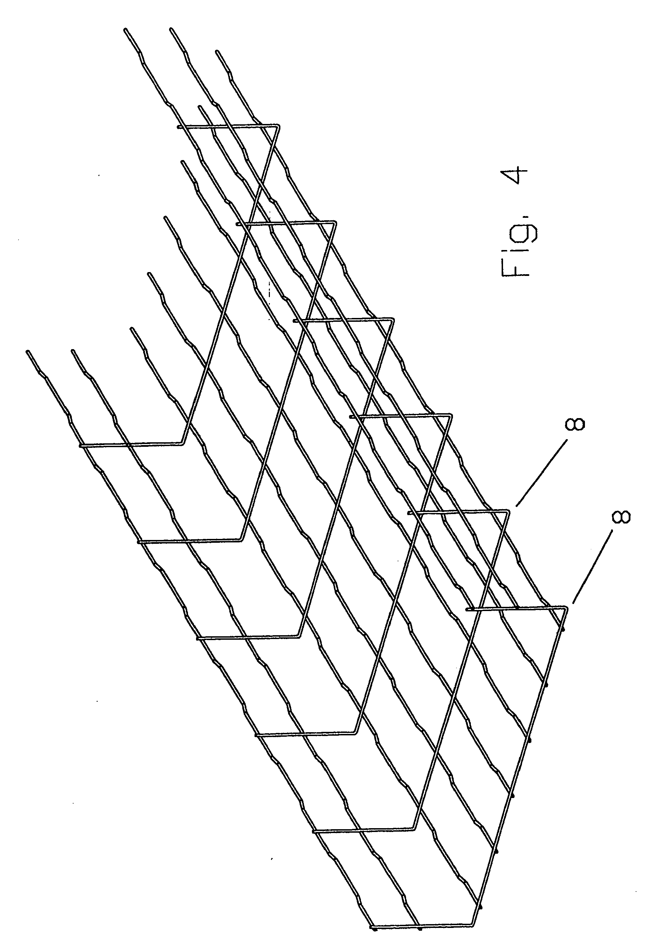

In either of the cases, the tray is later bent laterally, forming the side walls, at the angles 8 shown in Figure 4, being ideally set up to be fitted as a traditional grid tray.

One great advantage of this tray's structure is that the mixed layout of the longitudinal rods, with rising and descending sections and parts that define two parallel courses, means that its strength is much greater than that of a straight rod. This thus makes it possible for the tray to be lighter by reducing the thickness of the rod diameter, or using lighter alloys.

The invention is meant for industrial application in the manufacture of grid trays for electrical conductors.

## Claims

1. Grid tray for electrical conductors, formed by longitudinal rods (1) connected to transversal rods (2) whose section has an U-shape, **characterised in that** each longitudinal rod has a double change of direction or bend (3) between the transversal rods and on both sides of these, so that each of the longitudinal rods (1) level off in one section of their length with the transversal rods (2), forming a single plane surface.

2. Method for forming the grid tray of the claim 1, **characterised in that** it is made by the repeated following steps:
• electro-welding (9) the junctions of each of the the transversal (2) rod with all the longitudinal (1) rods in flat position,
• bending (3) one section of the longitudinal rods (1),
and finally
• bending (8) of the transversal rods (2) which form the side walls forming an U-shaped section.

3. Method for forming the grid tray of the claim 1, **characterised in that** it is made by the following steps:
• electro-welding (9) the transversal (2) and longitudinal (1) rods together, forming a flat whole part;
• inserting into a press whose die bends each of the intermediate sections between transversal rods;
• bending the side walls (8) forming an U-shaped section.

## Patentansprüche

1. Gitterboden für elektrische Leiter, die durch Längsstangen (1) gebildet werden, die mit Querstangen (2) verbunden sind, und deren einzelne Abschnitte eine U-Form aufweisen, wobei jede Längsstange eine doppelte Richtungsänderung oder Krümmung (3) zwischen den Querstangen hat und das an beiden Seiten von dieser, sodass jede der Längsstangen (1) in einer ihrer Längenabschnitte mit den Querstangen (2) einebnet, wodurch eine einzige Flächenebene gebildet wird.

2. Verfahren zum Herstellen von Gitterböden nach Anspruch 1, wobei dieser durch die folgenden sich wiederholenden Schritte hergestellt wird:
• Elektronenstrahlverschweißen (9) der Anschlussstellen jeder Querstange (2) mit all den Längsstangen (1) in eine flache Position,
• Biegung (3) eines Abschnittes der Längsstangen (1), und schließlich
• Biegung (8) der Querstangen (2), die die Seitenwände in einem U-Form Abschnitt formen.

3. Verfahren zum Herstellen von Gitterböden nach Anspruch 1, wobei dieser durch die folgenden Schritte hergestellt wird:
• Elektronenstrahlverschweißen (9) der Querstangen (2) und Längsstangen (1) miteinander, Bildung eines flachen Gesamtteils;
• Einfügen in eine Presse, deren Pressform jeden zwischen den Querstangen liegenden Abschnitt biegt;
• Biegen der Seitenwände (8) und Formung eines U-Form Abschnittes.

## Revendications

1. Plateau en grille pour conducteurs électriques, formée par des tiges longitudinales (1) unies à des tiges transversales (2), **caractérisée par le fait qu'**un double changement de trajectoire ou pliage (3) est appliqué à chaque tige entre les tiges transversales et aux deux bouts de celles-ci, ce qui fait que chacune des tiges longitudinales (1) se situe de niveau avec les tiges transversales (2) sur une partie de leur longueur, en constituant une unique superficie plane.

2. Méthode de formation de plateaux en grille, **caractérisée par le fait qu** le plateau de la revendication 1 est mené par la répétition des étapes suivantes :
• soudure électrique (9) d'union entre chacune des tiges transversales (2) et toutes les tiges longitudinales (1) en position plane;
• pliage (3) d'une section des tiges longitudinales; et finalement
• pliage (8) des tiges transversales (2) qui forment les parois latérales en formant une section en forme de "U".

3. Méthode de formation du plateau en grille de la revendication 1, **caractérisée par le fait qu'**elle est menée à bien à travers les étapes suivantes :
• la soudure électrique (9) des tiges transversales et longitudinales unies, formant une pièce unique;
• insertion dans la presse dont la matrice plie chacune des parties intermédiaires entre tiges transversales;
• pliage (8) des parois latérales en formant une section en forme de "U".
